## Europäisches Patentamt

## European Patent Office

## Office européen des brevets

(19)

(11) Numéro de publication: **0 206 875**
**B1**

(12)

# FASCICULE DE BREVET EUROPÉEN

(45) Date de publication du fascicule du brevet:
02.11.88

(51) Int. Cl.⁴: **F 28 D 20/00, F 25 B 17/00**

(21) Numéro de dépôt: **86401161.4**

(22) Date de dépôt: **30.05.86**

(54) Procédé et dispositif thermo-chimiques de stockage et déstockage de chaleur.

(30) Priorité: **04.06.85 FR 8508408**

(43) Date de publication de la demande:
**30.12.86 Bulletin 86/52**

(45) Mention de la délivrance du brevet:
**02.11.88 Bulletin 88/44**

(84) Etats contractants désignés:
**AT BE CH DE FR GB IT LI LU NL SE**

(56) Documents cité:
**EP-A-0 072 305**
**EP-A-0 130 908**
**DE-A-2 810 360**
**FR-A-2 376 371**
**FR-A-2 526 926**
**US-A-2 068 891**
**US-A-4 262 739**
**US-A-4 319 626**
**US-A-4 365 475**
**US-A-4 372 376**
**US-A-4 411 384**

**SOLAR ENERGY, vol. 21, 1978, pages 153-156, Pergamon Press Ltd., Oxford, GB; D.M. GRUEN et al.: "Metal hydrides as chemical heat pumps"**

(73) Titulaire: **SOCIETE NATIONALE ELF AQUITAINE Société anonyme dite, Tour Elf 2, Place de la Coupole La Défense 6, F-92400 Courbevoie (FR)**

(72) Inventeur: **Payre, Didier, 137, Avenue du Maréchal Joffre, F-66000 Perpignan (FR)**
Inventeur: **Mazet, Nathalie, 31, Impasse de la Sariette Clapiers, F-34170 Castelnau Le Lez (FR)**
Inventeur: **Mauran, Sylvain, 2, Rue de Théza, F-66000 Perpignan (FR)**
Inventeur: **Spinner, Bernard, 11, Boulevard Kennedy, F-66000 Perpignan (FR)**

(74) Mandataire: **Boillot, Marc, SOCIETE NATIONALE ELF AQUITAINE Division Propriété Industrielle Tour Elf, F-92078 Paris la Défense Cédex 45 (FR)**

## Description

La présente invention concerne un thermotransformateur c'est-à-dire une pompe à chaleur capable de fournir des calories à une température supérieure à celle de la source extérieure, selon un processus dans lequel on remonte deux fois le potentiel thermique. En particulier, l'invention concerne un thermotransformateur dans lequel les processus physicochimiques mettent en oeuvre soit une réaction entre un gaz et un solide en suspension ou non dans un solvant inerte, soit l'absorption entre un gaz et une solution saturée ou non.

On a déjà décrit dans EP-A-130 908 publiée le 9 janvier 1985 une pompe à chaleur thermochimique dans laquelle l'échange de calories entre une source de chaleur et le milieu réactionnel a lieu lors d'une réaction entre un gaz et une phase liquide constituée par une solution saturée en solide ou deux liquides non miscibles.

Cette réaction est monovariante de sorte que les calories sont délivrées à une température constante. En se référant à la figure 3 de cette demande de brevet européen, on remarque que lors de la réaction correspondant au déstockage de la chaleur, il y a un abaissement du potentiel thermique puisque la température Ta est inférieure à la température Th.

Au contraire, la présente invention prévoit un dispositif et un procédé selon lesquels il n'y a pas d'abaissement du potentiel thermique pendant la phase de déstockage de la chaleur.

Pour cela l'invention prévoit un dispositif thermochimique pour le stockage et le déstockage de la chaleur qui comporte deux réacteurs en contact chacun avec un milieu extérieur et reliés entre eux par une tubulure de communication, les réacteurs et la tubulure définissant un volume fermé, chaque réacteur comportant au moins un réactif susceptible de donner lieu à une réaction exothermique ou endothermique réversible en présence d'un gaz. Ce dispositif est caractérisé en ce que les réactions présentent, dans le diagramme de Clapeyron, des courbes qui se croisent dans le domaine de température d'utilisation du dispositif.

Un tel dispositif trouve une application particulièrement intéressante pour la gestion de l'énergie thermique.

De préférence, le gaz est le même dans chaque réacteur et selon un mode préféré de réalisation, au moins une des réactions est monovariante.

L'invention prévoit aussi un procédé thermochimique de stockage et de déstockage de la chaleur selon lequel on met en oeuvre, dans une enceinte fermée, deux processus physicochimiques permettant d'échanger des calories entre au moins un milieu réactionnel et au moins un milieu extérieur, chacun desdits processus mettant en oeuvre au moins un réactif susceptible de donner lieu à une réaction exothermique ou endothermique reversible lorsqu'il est en présence d'un gaz, caractérisé par le fait que ces processus physicochimiques sont des réactions qui présentent, dans le diagramme de Clapeyron, des courbes qui se croisent dans le domaine de température de mise en oeuvre du procédé.

Le procédé selon l'invention peut fonctionner aussi en pompe à chaleur, il suffit pour cela de mettre en oeuvre les processus simultanément, ce qui permet d'alimenter un processus avec les calories fournies par l'autre.

Lors de la mise en oeuvre de ce procédé, chacune des réactions physicochimiques met en jeu de préférence un gaz et au moins un réactif susceptible de donner lieu à une réaction exothermique ou endothermique reversible lorsqu'il est en présence du gaz.

De préférence, le gaz est le même pour chacune des réactions. Il peut être choisi parmi $H_2$, $H_2O$ vapeur, $CO_2$, $SO_2$, $SO_3$, les mélanges $SO_2/SO_3$, l'ammoniac et ses dérivés, $NO_2$ et les alcools.

Selon une caractéristique complémentaire, au moins une des réactions est monovariante. Elle possède alors un seul degré de liberté et par exemple, le fait d'en fixer la température en détermine la pression.

Selon un premier mode de réalisation de l'invention, ledit réactif est un solide de préférence un solide susceptible d'insérer ledit gaz. Ledit solide est de préférence choisi parmi: $CeNi_3Cu_2$, $CeNi_{2,5}Cu_{2,5}$, $Ce_{11}Ni_{2,5}Cu_{2,5}$, $LaNi_5$, $LaNi_{4,9}Al_{0,1}$, $LaNi_{4,75}Al_{0,25}$, $LaNi_{4,6}Al_{0,4}$, $LaNi_{4,5}Al_{0,5}$, $LaNi_{4,25}Al_{0,75}$, $LaNi_4Al$, $LaNi_{4,95}Mn_{0,5}$, $LaNi_{4,83}Mn_{0,17}$, $LaNi_{4,65}Mn_{0,35}$, $LaNi_{4,56}Mn_{0,44}$, $LaNi_{4,30}Mn_{0,70}$, $LaNi_{4,06}Mn_{0,94}$, $Zr_{0,8}Ti_{0,2}MnFe$, $ZrCr_{0,6}Fe_{1,4}$, $Zr_{0,8}Ti_{0,2}Cr_{0,6}Fe_{1,4}$, $Zr_{0,7}Ti_{0,3}Mn_2$, $Zr_{0,8}Ce_{0,2}Mn_2$, $ZrMn_{2,8}$, $ZrMn_{3,8}$, $ZrMn_2Cu_{0,8}$, NiZr, $Mg_{2,4}Ni$, $Mg(LaNi_5)$ 20 %.

Mais selon un autre mode de réalisation de l'invention, ledit réactif est une solution saturée d'un solide, par exemple un nitrate ammoniaqué, un sulfate de zinc ammoniaqué, un chlorure de calcium ammoniaqué.

Mais l'invention sera mieux comprise à la lecture de la description suivante faite d'une manière illustrative et nullement limitative en référence aux dessins annexés dans lesquels:

- la figure 1 est une vue schématique d'un dispositif selon l'invention,
- les figures 2 à 4 sont des diagrammes de Clapeyron qui représentent, pour une réaction thermochimique donnée, la variation du logarithme néxerien de la pression en fonction de la température,
- les figures 5 et 6 sont des diagrammes de Clapeyron pour des équilibres entre un alliage l'hydrogène et l'hydrure correspondant.

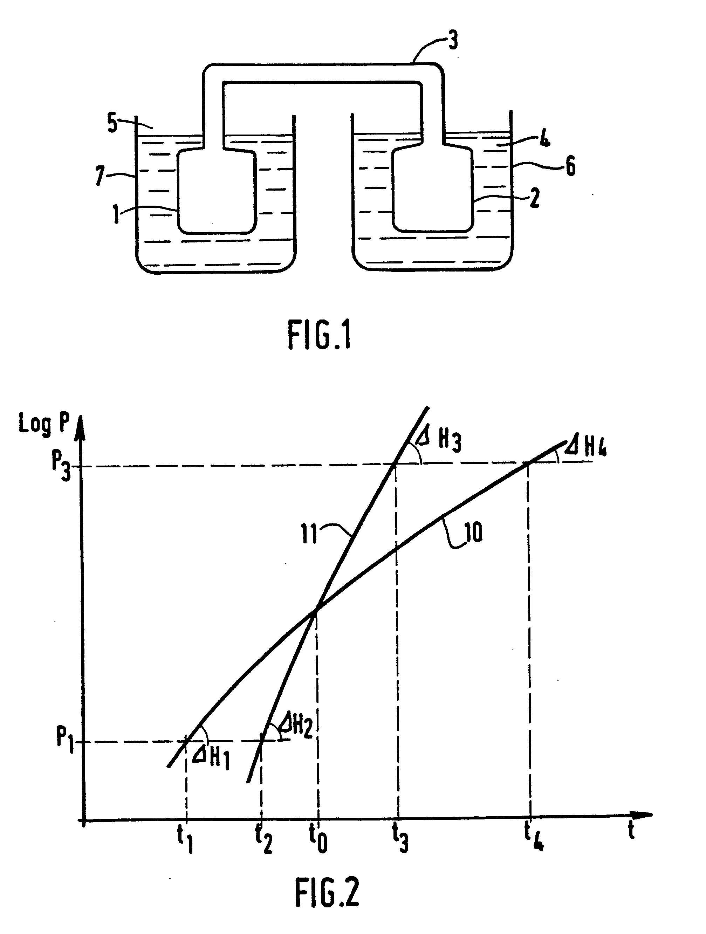

On a représenté sur la figure 1 de façon schématique une installation d'un thermotransformateur réalisé selon l'invention et sur la figure 2 les courbes des équilibres physicochimiques selon les coordonnées de Clapeyron.

Le dispositif représenté figure 1 comporte deux réacteurs (1) et (2) reliés entre eux par une tubulure (3). Chaque réacteur est mis en contact avec un milieu extérieur (4) et (5) représenté comme étant contenu dans des enceintes (6) et (7).

Dans chaque réacteur, on place des réactifs qui sont susceptibles de réagir avec le même gaz selon des réactions exothermiques ou endothermiques réversibles et monovariantes. Des exemples de tels réactifs seront donnés plus loin.

Dans le réacteur (1), on a les réactifs $R_1$ et $R_2$ réagissant avec le gaz G selon la réaction:

$$\Delta H_1 + R_1 <=> G + R_2 \qquad (I)$$

De même, dans le réacteur (2), on a la réaction:

$$R_3 + G <=> R_4 + \Delta H_2 \qquad (II)$$

Les courbes d'équilibre de ces réactions sont représentées sur la figure 2, la courbe (10) pour le réacteur (1) et (11) pour le réacteur (2) ces courbes se coupent en un point correspondant à une température to.

Le dispositif fonctionne de la manière suivante:

**1. Etape de stockage**

On fournit des calories $\Delta H_1$ à la température t1 au réacteur (1). La réaction (1) a lieu dans le sens de production du gaz G à la pression $P_1$. Ce gaz est introduit dans le réacteur (2) par la tubulure (3) à la même pression.

Il se produit alors la réaction II qui a lieu à la température $t_2$ et fournit les calories $\Delta H_2$. La température t2 est supérieure à t1 mais inférieure à to.

**2. Etape de déstockage**

On fournit les calories $\Delta H_3$ au réacteur (2), à une température t3 supérieure à la température to. La réaction a lieu dans le sens de la production du gaz G à la pression $P_3$. Lors de son passage dans le réacteur 1, le gaz G réagit avec $R_2$ et dans le sens exothermique de la réaction (I) de façon à fournir les calories $\Delta H_4$ à la température t4.

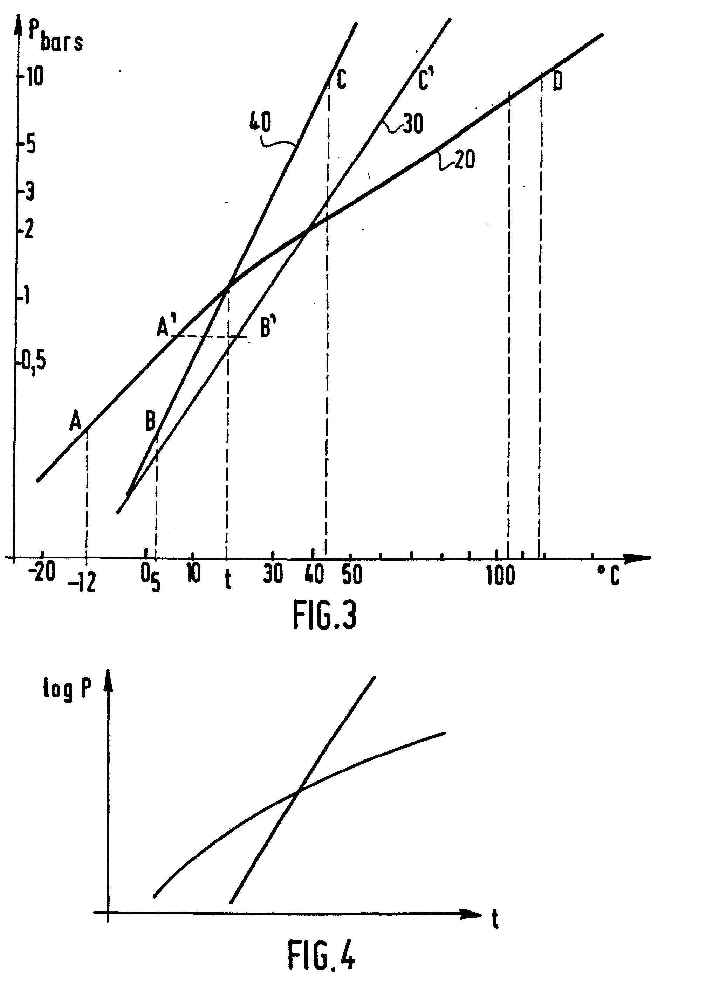

On voit que le dicpositif a fonctionné avec une double remontée des temératures alors que les dispositifs selon l'article antérieur fonctionnent avec une baisse du potentiel thermique lors de la phase de déstockage. On a représenté sur la figure 3 les courbes de Clapeyron correspondant à ces réactifs bien particuliers et décrits dans les exemples suivants:

**Exemple 1**

Dans le réacteur (1), on place une solution de nitrate ammoniaqué dans l'eau qui est susceptible de réagir selon la réaction:

$$\Delta H_1 (NH_4) NO_3 <=> NH_3 + NH_4 NO_3$$

Cet équilibre est représenté par la courbe (20) de la figure 3.

Dans ce réacteur, on a donc une réaction réversible monovariante d'équilibre entre un gaz et une solution saturée.

Dans le réacteur (2), on établit une réaction entre le gaz ($NH_3$) et un solide, du sulfate de zinc ammoniaqué, selon la réaction monovariante.

$$Zn (NH_3)_5 SO_4 <=> Zn (NH_3)_3 SO_4 + 2 NH_3.$$

Cet équilibre est représenté par la courbe (40).

En fonctionnement, l'étape de stockage se fait par pompage de calories à -12°C (t1). Celles-ci sont évacuées à 5°C (Points A et B sur la figure 3). Pour le déstockage, on utilise les calories d'une source à 40°C (point C) pour produire des calories à 115°C (point D).

**Exemple 2**

La réaction dans le réacteur (1) est la même que dans l'exemple précédent mais dans le réacteur (2) on a une réaction entre l'ammoniaque et du chlorure de calcium ammoniaqué:

$$Ca Cl_2 (NH_3) 8 <=> Ca Cl_2 (NH_3) 4 + 4 NH_3$$

Réaction dent la courbe d'équilibre est représentée en (30) figure 3.

En fonctionnement, on pompe les calories à 5°C, et on les récupère à 20°C (points A' et B'). Pour le déstockage, on utilise les calories à 70°C que l'on récupère à 115°C (D et C').

Mais l'invention peut aussi être mise en oeuvre avec un autre gaz par exemple la méthylamine $CH_3 NH_2$.

Par exemple, on peut prévoir dans le réacteur (1) une solution saturée de thiocyanate de potassium réagissant avec la méthylamine et dans le réacteur (2) on prévoit un équilibre:

$$Ca Cl_2 (CH_3 NH_2)_6 <=> Ca Cl_2 (CH_3 NH_2)_2 + 4 CH_3 NH_2.$$

On a représenté sur la figure 4 les courbes de ces équilibres.

Un intérêt principal du procédé selon l'invention réside dans sa souplesse quant au choix des réactifs. Ainsi, les exemples qui suivent sont basés sur des réactions d'absorption de l'hydrogène par des métaux ou des mélanges de métaux de façon à produire des hydrures.

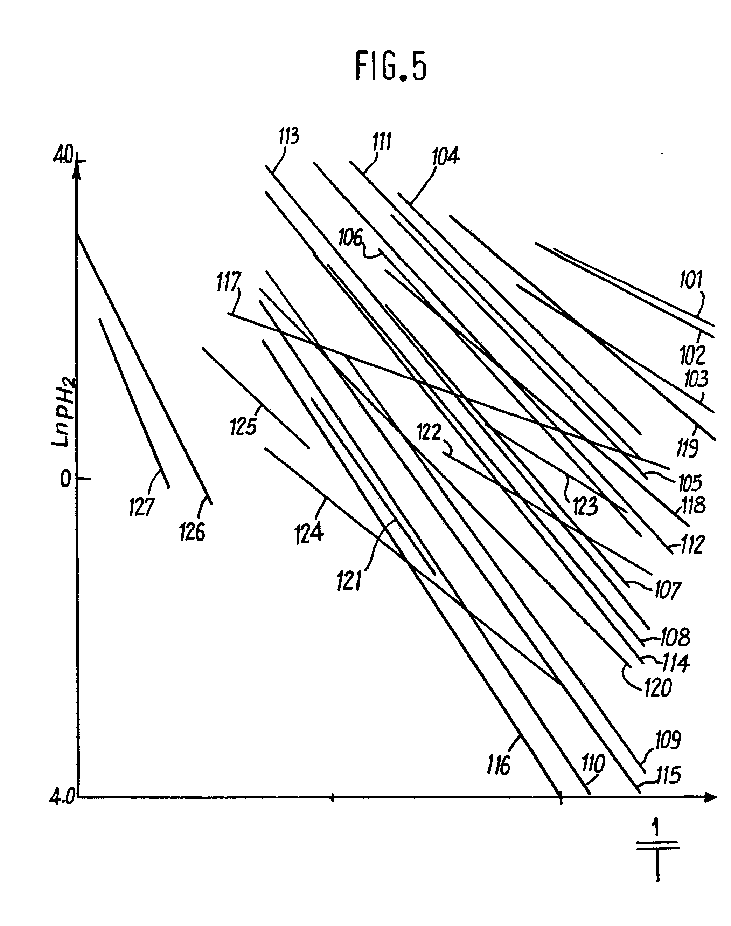

La figure 5 est une vue similaire aux figures 2, 3 et 4, mais elle a été tracée en fonction de l'inverse de la température, ce qui explique que les pentes des droites soient de signe opposé.

Cette figure 5 représente les diagrammes de Clapeyron pour une série d'alliage lorsqu'ils sont en équilibre avec l'hydrogène et l'hydrure correspondant.

Sur cette figure, les différents repères correspondent aux alliages suivants:

101 : $CeNi_3Cu_2$
102 : $CeNi_{2,5}Cu_{2,5}$
103 : $Ce_{11}Ni_{2,5}Cu_{2,5}$
104 : $LaNi_5$
105 : $LaNi_{4,9}Al_{0,1}$
106 : $LaNi_{4,75}Al_{0,25}$
107 : $LaNi_{4,6}Al_{0,4}$
108 : $LaNi_{4,5}Al_{0,5}$
109 : $LaNi_{4,25}Al_{0,75}$
110 : $LaNi_4Al$
111 : $LaNi_{4,95}Mn_{0,05}$
112 : $LaNi_{4,83}Mn_{0,17}$
113 : $LaNi_{4,65}Mn_{0,35}$
114 : $LaNi_{4,56}Mn_{0,44}$
115 : $LaNi_{4,30}Mn_{0,70}$
116 : $LaNi_{4,06}Mn_{0,94}$
117 : $Zr_{0,8}Ti_{0,2}MnFe$
118 : $ZrCr_{0,6}Fe_{1,4}$
119 : $Zr_{0,8}Ti_{0,2}Cr_{0,6}Fe_{1,4}$
120 : $Zr_{0,7}Ti_{0,3}Mn_2$
121 : $Zr_{0,8}Ce_{0,2}Mn_2$
122 : $ZrMn_{2,8}$
123 : $ZrMn_{3,8}$
124 : $ZrMn_2Cu_{0,8}$
125 : $NiZr$
126 : $Mg_{2,4}Ni$
127 : $Mg(LaNi_5)$ 20 %

Pour mettre en oeuvre un procédé selon l'invention, il suffit de choisir deux couples d'alliage, par exemple $Zr_{0,8}TiO_2MnFe$ (Courbe 117) et $LaNi_{4,75}AlO_{2,5}$ (Courbe 107).

Les deux courbes (117) et (107), transposées dans un diagramme de Clapeyron représenté en fonction de t (non pas 1/T) ont une allure très similaire à celle des courbes représentées figures 2 à 4.

Une fois les réactifs choisis, le procédé fonctionne dès que le milieu gazeux, en l'occurrence l'hydrogène, est mis en place.

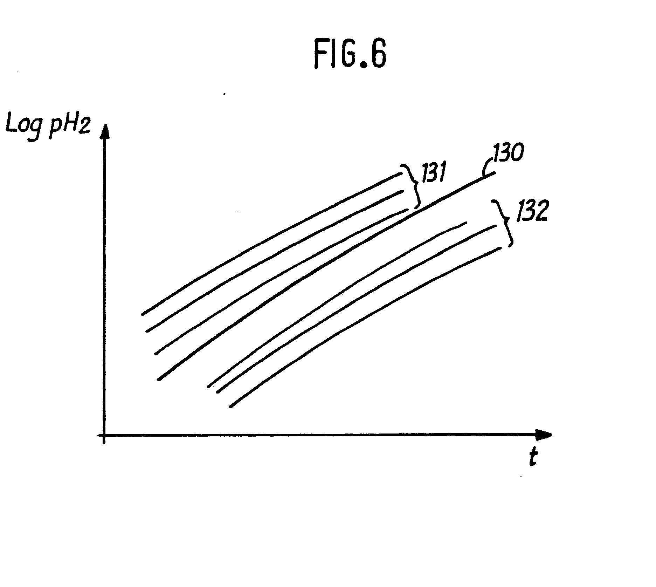

Mais le procédé peut être utilisé avec des mélanges d'alliage ou encore avec des hydrures non stoéchiométriques. Dans ce cas, on se place sur les courbes isostériques (131, 132), telles que représentées figure 6 où la courbe (130) est la courbe stoéchiométrique. Il est évident alors que l'on n'est plus dans des conditions de réaction monovariante, mais de réaction divariante.

De façon à améliorer les échanges thermiques, on peut envisager toute disposition permettant d'homogénéiser les milieux réactionnels et en particulier on peut envisager une agitation par ultrasons.

Mais l'Homme de l'Art pourra choisir tous autres couples de réactions physicochimiques pour mettre en oeuvre l'invention, l'important étant que ces réactions présentent, dans le diagramme de Clapeyron, des courbes d'équilibre qui se croisent dans le domaine de température d'utilisation.

Ainsi, on pourra choisir deu, réactions d'équilibre entre un solide et un gaz, par exemple dans un réacteur on mettra du sulfate de zinc ammoniaqué et dans l'autre du chlorure de strontium ammoniaqué de façon à obtenir les réactions:

$$Zn\ SO_4\ (NH_3) < = > Zn\ SO_4\ (NH_3)_3 + NH_3$$

$$Sr\ Cl_2\ (NH_3) + 6\ NH_3 < = > Sr\ Cl_2\ (NH_3)_7$$

**Revendications**

1. Dispositif thermochimique pour le stockage et le déstockage de la chaleur comprenant deux réacteurs (1) et (2) en contact chacun avec un milieu extérieur (4) et (5), lesdits réacteurs étant reliés entre eux par une tubulure de communication (3) de façon à définir une enceinte fermée, chaque réacteur comportant au moins un réactif susceptible de donner lieu à une réaction exothermique ou endothermique réversible lorsqu'il est en présence d'un gaz, caractérisé en ce que lesdites réactions présentent dans le diagramme de Clapeyron des courbes qui se croisent dans le domaine de température d'utilisation dudit dispositif.

2. Procédé thermochimique de stockage et de déstockage de la chaleur selon lequel on met en oeuvre dans une enceinte fermée deux processus physicochimiques permettant d'échanger des calories entre au moins un milieu réactionnel et au moins un milieu extérieur, chacun desdits processus mettant en oeuvre au moins un réactif susceptible de donner lieu à une réaction exothermique ou endothermique reversible lorsqu'il est en présence d'un gaz, caractérisé en ce que lesdits processus physicochimiques consistent en des réactions physicochimiques qui présentent, dans le diagramme de Clapeyron, des courbes qui se croisent dans le domaine de température de mise en oeuvre du procédé.

3. Procédé selon la revendication 2, caractérisé en ce que le gaz est le même pour chacune des réactions.

4. Procédé selon la revendication 2, caractérisé en ce que au moins une des réactions est monovariante.

5. Procédé selon la revendication 2, caractérisé en ce que ledit réactif est un solide.

6. Procédé selon la revendication 5, caractérisé en ce que le solide est un alliage susceptible d'insérer ledit gaz.

7. Procédé selon la revendication 2, caractérisé en ce que le gaz est choisi parmi $H_2$, $H_2O$ vapeur, $CO_2$, $SO_2$, $SO_3$, les mélanges $SO_2/SO_3$, l'ammoniac et ses dérivés, $NO_2$ et les alcools.

8. Procédé selon la revendication 7, caractérisé en ce que le solide susceptible d'insérer le gaz est constitué par un alliage ou un mélange d'alliages.

9. Procédé selon la revendication 8, caractérisé en ce que l'alliage est choisi parmi: $CeNi_3Cu_2$, $CeNi_{2,5}Cu_{2,5}$, $Ce_{11}Ni_{2,5}Cu_{2,5}$, $LaNi_5$, $LaNi_{4,9}Al_{0,1}$, $LaNi_{4,75}Al_{0,25}$, $LaNi_{4,6}Al_{0,4}$, $LaNi_{4,5}Al_{0,5}$,

LaNi$_{4,25}$Al$_{0,75}$, LaNi$_4$Al, LaNi$_{4,95}$Mn$_{0,05}$,
LaNi$_{4,83}$Mn$_{0,17}$, LaNi$_{4,65}$Mn$_{0,35}$, LaNi$_{4,56}$Mn$_{0,44}$,
LaNi$_{4,30}$Mn$_{0,70}$, LaNi$_{4,06}$Mn$_{0,94}$, Zr$_{0,8}$Ti$_{0,2}$MnFe,
ZrCr$_{0,6}$Fe$_{1,4}$, Zr$_{0,8}$Ti$_{0,2}$Cr$_{0,6}$Fe$_{1,4}$, Zr$_{0,7}$Ti$_{0,3}$Mn$_2$,
Zr$_{0,8}$Ce$_{0,2}$Mn$_2$, ZrMn$_{2,8}$, ZrMn$_{3,8}$, ZrMn$_2$Cu$_{0,8}$, NiZr,
Mg$_{2,4}$Ni, Mg(LaNi$_5$) 20 %.

10. Procédé selon la revendication 9, caractérisé en ce que le gaz est l'hydrogène.

11. Procédé selon la revendication 2, caractérisé en ce que ledit réactif est une solution saturée d'un solide.

12. Procédé selon l'une des revendications 2 à 11, caractérisé en ce que l'une des réactions est monovariante.


## Patentansprüche

1. Thermochemische Vorrichtung zum Speichern und Freigeben der Wärme, die zwei Reaktionsgefäße (1) und (2) jeweils im Kontakt mit einem äußeren Medium (4) und (5) aufweist, welche Reaktionsgefäße untereinander durch eine Verbindungsleitung (3) derart verbunden sind, daß ein geschlossener Behälter begrenzt wird, wobei jedes Reaktionsgefäß wenigstens ein Reagens aufweist, das sich zum Ablauf einer reversiblen, exothermen oder endothermen Reaktion eignet, wenn es in Gegenwart eines Gases ist,
dadurch gekennzeichnet,
daß diese Reaktionen im Clapeyron-Diagramm Kurven aufweisen, die sich im Anwendungstemperaturbereich dieser Vorrichtung kreuzen.

2. Thermochemisches Verfahren zum Speichern und Freigeben der Wärme, gemäß dem man in einem geschlossenen Behälter zwei physiko-chemische Prozesse einsetzt, die einen Austausch der Wärme zwischen wenigstens einem Reaktionsmedium und wenigstens einem äußeren Medium ermöglichen, wobei jeder dieser Prozesse von wenigstens einem Reagens Gebrauch macht, das sich zum Ablauf einer reversiblen, exothermen oder endothermen Reaktion eignet, wenn es in Gegenwart eines Gases ist,
dadurch gekennzeichnet,
daß diese physiko-chemischen Prozesse aus physiko-chemischen Reaktionen bestehen, die im Clapeyron-Diagramm Kurven aufweisen, die sich im Temperaturbereich der Durchführung des Verfahrens kreuzen.

3. Verfahren nach dem Anspruch 2, dadurch gekennzeichnet, daß das Gas für jede der Reaktionen das gleiche ist.

4. Verfahren nach dem Anspruch 2, dadurch gekennzeichnet, daß wenigstens eine der Reaktionen monovariant ist.

5. Verfahren nach dem Anspruch 2, dadurch gekennzeichnet, daß das Reagens ein Feststoff ist.

6. Verfahren nach dem Anspruch 5, dadurch gekennzeichnet, daß der Feststoff eine zum Einfügen des Gases geeignete Legierung ist.

7. Verfahren nach dem Anspruch 2, dadurch gekennzeichnet, daß das Gas unter H$_2$, H$_2$O-Dampf, CO$_2$, SO$_2$, SO$_3$, den SO$_2$/SO$_3$-Gemischen, dem Ammoniak und seinen Abkömmlingen, NO$_2$ und den Alkoholen gewählt ist.

8. Verfahren nach dem Anspruch 7, dadurch gekennzeichnet, daß der zum Einfügen des Gases geeignete Feststoff aus einer Legierung oder einem Legierungsgemisch besteht.

9. Verfahren nach dem Anspruch 8, dadurch gekennzeichnet, daß die Legierung unter: CeNi$_3$Cu$_2$, CeNi$_{2,5}$Cu$_{2,5}$, Ce$_{11}$Ni$_{2,5}$Cu$_{2,5}$, LaNi$_5$, LaNi$_{4,9}$Al$_{0,1}$, LaNi$_{4,75}$Al$_{0,25}$, LaNi$_{4,6}$Al$_{0,4}$, LaNi$_{4,5}$Al$_{0,5}$, LaNi$_{4,25}$Al$_{0,75}$, LaNi$_4$Al, LaNi$_{4,95}$Mn$_{0,05}$, LaNi$_{4,83}$Mn$_{0,17}$, LaNi$_{4,65}$Mn$_{0,35}$, LaNi$_{4,56}$Mn$_{0,44}$, LaNi$_{4,30}$Mn$_{0,70}$, LaNi$_{4,06}$Mn$_{0,94}$, Zr$_{0,8}$Ti$_{0,2}$MnFe, ZrCr$_{0,6}$Fe$_{1,4}$, Zr$_{0,8}$Ti$_{0,2}$Cr$_{0,6}$Fe$_{1,4}$, Zr$_{0,7}$Ti$_{0,3}$Mn$_2$, Zr$_{0,8}$Ce$_{0,2}$Mn$_2$, ZrMn$_{2,8}$, ZrMn$_{3,8}$, ZrMn$_2$Cu$_{0,8}$, NiZr, Mg$_{2,4}$Ni, Mg(LaNi$_5$) 20 % gewählt ist.

10. Verfahren nach dem Anspruch 9, dadurch gekennzeichnet, daß das Gas Wasserstoff ist.

11. Verfahren nach dem Anspruch 2, dadurch gekennzeichnet, daß das Reagens eine gesättigte Lösung eines Feststoffs ist.

12. Verfahren nach einem der Ansprüche 2 bis 11, dadurch gekennzeichnet, daß eine der Reaktionen monovariant ist.


## Claims

1. A thermochemical device for the storage and taking from store of heat, comprising two reactors (1) and (2), each in contact with an external medium (4) and (5), the said reactors being linked to each other by a communication pipe (3) in such a way as to define a closed chamber, each reactor comprising at least one reagent capable of causing a reversible exothermic or endothermic reaction when it is in the presence of a gas, characterized in that on the Clapeyron graph, the said reactions produce curves which intersect in the region of the operation temperature of the said device.

2. Thermochemical process for the storage and taking from store of heat, according to which two physico-chemical processes are brought into play in a closed chamber, making possible the exchange of calories between at least one reactive medium and at least one external medium, each of the said processes using at least one reagent capable of giving rise to a reversible exothermic or endothermic reaction when it is in the presence of a gas, characterized in that the said physico-chemical processes consist of physico-chemical reactions, these producing curves on the Clapeyron graph which intersect in the region of the implementation temperature of the process.

3. Process according to claim 2, characterized in that the gas is the came for each of the reactions.

4. Process according to claim 2, characterized in that at least one of the reactions is monovariant.

5. Process according to claim 2, characterized in that the said reagent is a solid.

6. Process according to claim 5, characterized in that the solid is an alloy capable of absorbing the said gas.

7. Process according to claim 2, characterized in that the gas is chosen from among $H_2$, $H_2O$ vapour, $CO_2$, $SO_2$, $SO_3$, the mixtures $SO_2/SO_3$, ammonia and its derivatives, $NO_2$ and the alcohols.

8. Process according to claim 7, characterized in that the solid capable of absorbing the gas is constituted by an alloy or a mixture of alloys.

9. Process according to claim 8, characterized in that the alloy is chosen from among: $CeNi_3Cu_2$, $CeNi_{2.5}Cu_{2.5}$, $Ce_{11}Ni_{2.5}Cu_{2.5}$, $LaNi_5$, $LaNi_{4.9}Al_{0.1}$, $LaNi_{4.75}Al_{0.25}$, $LaNi_{4.6}Al_{0.4}$, $LaNi_{4.5}Al_{0.5}$, $LaNi_{4.25}Al_{0.75}$, $LaNi_4Al$, $LaNi_{4.95}Mn_{0.05}$, $LaNi_{4.83}Mn_{0.17}$, $LaNi_{4.65}Mn_{0.35}$, $LaNi_{4.56}Mn_{0.44}$, $LaNi_{4.30}Mn_{0.70}$, $LaNi_{4.06}Mn_{0.94}$, $Zr_{0.8}Ti_{0.2}MnFe$, $ZrCr_{0.6}Fe_{1.4}$, $Zr_{0.8}Ti_{0.2}Cr_{0.6}Fe_{1.4}$, $Zr_{0.7}Ti_{0.3}Mn_2$, $Zr_{0.8}Ce_{0.2}Mn_2$, $ZrMn_{2.8}$, $ZrMn_{3.8}$, $ZrMn_2Cu_{0.8}$, NiZr, $Mg_{2.4}Ni$, $Mg(LaNi_5)$ 20 %.

10. Process according to claim 9, characterized in that the gas is hydrogen.

11. Process according to claim 2, characterized in that the said reagent is a saturated solution of a solid.

12. Process according to one of the claims 2 to 11 characterized in that one of the reactions is monovariant.

FIG.1

FIG.2

FIG.3

FIG.4

FIG.5

# FIG.6